# EUROPÄISCHE PATENTSCHRIFT

(11) **EP 2 877 542 B1**
(45) Veröffentlichungstag und Bekanntmachung des Hinweises auf die Patenterteilung: **20.04.2016**
(21) Anmeldenummer: 13744955.9
(22) Anmeldetag: 19.07.2013
(51) Int. Cl.: C09D 7/00

(54) **VERFAHREN ZUR HERSTELLUNG VON DISPERSIONSFARBEN**
METHOD FOR PRODUCING EMULSION PAINT
PROCÉDÉ DE FABRICATION DE PEINTURES DE DISPERSION

(30) Priorität: 27.07.2012 DE 102012015022
(43) Veröffentlichungstag der Anmeldung: 03.06.2015
(73) Patentinhaber: Hemmelrath Technologies GmbH, 63906 Erlenbach (DE)
(72) Erfinder: HOHMANN, Ralf, 63920 Großheubach (DE)
(74) Vertreter: Pöhner, Wilfried Anton
(86) Internationale Anmeldenummer: PCT/DE2013/100271
(87) Internationale Veröffentlichungsnummer: WO 2014/015858

(56) Entgegenhaltungen:
- EP-A1- 0 562 341
- EP-A1- 0 997 478
- EP-A1- 2 392 614
- EP-A2- 0 476 507
- EP-A2- 0 894 834
- EP-A2- 1 568 740
- WO-A2-2007/041732
- DE-A1- 1 945 319

## Beschreibung

Die Erfindung bezieht sich auf ein Verfahren zur Herstellung von Dispersionsfarbe unter Verwendung von Zusatzstoffen wie Füllstoffen, Pigmenten, Additiven, Dispergiermittel, Entschäumer, Filmbindehilfsmittel, Konservierungsmittel sowie Celluloseether und/oder Xanthane als Verdickungsmittel sowie Bindemittel.

Das Ziel ist die Schaffung von Dispersionsfarben, die sich durch eine hohe Verdickungsleistung, eine gute Lagerstabilität und eine einfache Verarbeitung und umweltfreundliche Applikation auszeichnen. Ferner sollen die Produkte in unterschiedlichen Rezepturen gleichbleibend gute anwendungstechnische Eigenschaft aufweisen, d.h. geringe Spritzneigung, gute Farboberfläche, leichte Verstreichbarkeit, hohe Scheuerfestigkeit, gute Pigmentverteilung und ähnlichem. Zudem sollte die Dispersionsfarbe verfahrenstechnisch schnell und einfach sowie kostengünstig produzierbar sein.

In Dispersionsfarben sind wie in allen mit Wasser verdünnbaren Anstrichmittelsysteme Beschichtungsmaterialien in Form von Bindemitteln, Füllstoffen, Pigmenten, Additiven und Wasser enthalten und es werden bekanntlich Celluloseether als Verdickungsmittel zugesetzt. Außer ihrer Verdickungswirkung weisen diese Celluloseether auch einen positiven Einfluss auf die Stabilisierung, das Fließverhalten und das Wasserrückhaltevermögen der Dispersionsfarben auf. Dabei eignen sich die Celluloseether für Dispersionsfarben üblicher Zusammensetzung, bei denen die Bindemittel z.B. Polyvinylacetat, Polyvinylpropionat und Styrolacrylat, die Pigmente z.B. Titandioxid, Bariumsulfat und Zinksulfid, die Füllstoffe z.B. Calciumcarbonat, Calciumsulfat, Quarz, Kaolin, China-Clay und Talkum, die Additive Netz- und Dispergiermittel wie z.B. Polyphosphat und Polyacrylate, die Entschäumer z.B. Produkte auf Mineralölbasis, die Filmbildehilfsmittel, z.B. Testbenzin und Butylcarbitolacetat und die Konservierungsmittel, wie z.B. Phenolverbindung und organische Amide enthalten können. Diese Bestandteile der Dispersionsfarben sind allgemein geläufig.

Der Begriff "Verdickungsmittel" ist im Sinne der Erfindung allgemein auszulegen und beschreibt meist organische, hochmolekulare Stoffe, die Flüssigkeiten, in der Regel Wasser, aufsaugen, dabei aufquellen und schließlich in zähflüssige echte oder kolloide Lösungen übergehen und die häufig auch als Quellmittel bezeichnet werden (s. Römpp Chemie Lexikon, 9. Auflage, Georg Thieme Verlag, Stichwort "Verdickungsmittel"). Auch Xanthane, die bekanntlich als Verdickungsmittel und Stabilisatoren für Emulsionen bei der Farbherstellung eingesetzt werden. Es handelt sich hierbei um eine Glukoseverbindung, die durch mikrobielle Kulturen auf der Basis von Kohlenhydraten produziert werden. Nach Abtöten der Kulturen erhält man die gewünschten Xanthane. Im Hinblick auf ihre chemische Beschaffenheit handelt es sich um Cellulose bestehend aus einer Kette mit gebundenen Glukosen mit Seitenketten und die in ihren Eigenschaften durch die Struktur der Untergruppen bestimmt wird, wobei die Anzahl der Pyrovat-Einheiten die Viskosität des Xanthans bestimmt.

Die Verdickungswirkung von Cellulose-Typen in Wasser bzw. wasserverdünnbaren Bindemitteln und Farben ist näher zu betrachten. Wie für alle hochmolekularen Polymere gilt generell, dass die Verdickungswirkung in Wasser mit dem Molekulargewicht ansteigt. Die Herstellung hochmolekularer Cellulosen wird aber durch die Natur der Ausgangsstoffe, z.B. den Zellstoffen begrenzt. Zur Gewinnung wasserquellbarer und damit verdickender Cellulosen ist eine Hydrophobierung notwendig, die in aller Regel über die Veretherung hergestellt wird und in den häufigsten Fällen auch zu Molekulargewichtserniedrigungen durch Nebenreaktionen führen. Es ist deshalb im Stand der Technik bekannt, niedrigmolekulare Cellulosen dadurch zu erzeugen, dass durch polymeranaloge Reaktionen, wie z.B. Vereetherung modifizierte Celluloseverbindung umgesetzt werden, welche hochviskose Lösungen in Wasser ergeben. Derartig modifizierte Celluloseether weisen eine hohe Oberflächenaktivität auf und können zur Herstellung viskoser wässriger Lösungen herangezogen werden.

Bei der Einbringung der wasserlöslichen Celluloseether sei es in fester Pulverform oder in wässriger Suspension, treten häufig Probleme dadurch auf, diese Verdickungsmittel klumpenfrei aufzulösen und zu dispergieren und damit eine schnelle und gleichmäßige Auflösung bis zum endgültigen Viskositätsaufbau zu erreichen. Es sind unterschiedliche Maßnahmen bekannt, die im Prinzip darauf hinauslaufen, dass Anquellen der Oberfläche der Celluloseether-Partikel (Pulver, Granulate, Agglomerate) durch die Einwirkung von Wassermolekülen zumindest solange zu verhindern oder hinaus zu zögern, bis die Partikel gleichmäßig in der wasserenthaltenden Dispersionsfarbe verteilt sind. Einen Überblick über die Vielzahl der bereits vorgenommenen Maßnahmen lassen sich der DE OS 3232467 entnehmen, die im Kern darin bestehen, durch Umsetzung der Cellulose bzw. Celluloseether mit unterschiedlichen chemischen Verbindungen eine Modifizierung der Löslichkeitseigenschaften im Sinne einer Verbesserung zu erreichen.

Das Verhalten von Celluloseether in wässrigen Lösungen wird im wesentlichen durch den pH-Wert bestimmt. Bei einem pH-Wert von unter 7,5 unterbleibt jede Quell-Reaktion der Celluloseethers, bei einer Erhöhung des pH-Wertes mit einem Übergangsbereich um den pH-Wert 8 erfolgt der Aufschluss des Celluloseethers, so dass sie ihre Funktion als Verdickungsmittel erfüllt. Die übliche Vorgehensweise bei der Herstellung von Dispersionsfarbe ist, den Celluloseether bei einem pH-Wert von 7 (oder darunter) in die wässrige Lösung als Pulver oder Suspension einzustreuen, durch mechanisches Rühren homogen zu verteilen und dann anschließend durch Zugabe von Alkali den pH-Wert hochzufahren, damit der Aufschluss der Cellulose angestoßen wird und ein homogenes Gemisch entsteht, welches seine Funktion als Verdickungsmittel erfüllen kann. Würde man den Celluloseether in eine bereits alkalische wässrige Lösung eingeben, würde der Celluloseether sofort aufgeschlossen werden, jedoch werden sich in nachteiliger Weise Klumpen und Knoten bilden, die sich nicht ohne weiteres mit üblichen Verarbeitungstechnologien hinreichend fein zerkleinern lassen und die beim Auftragen zu einer pickelartigen Oberfläche führen, die sich nicht mehr beseitigen lässt. Die Dispersionsfarbe wäre folglich unbrauchbar.

Ein weiteres Problem besteht darin, die weiteren Zusatzstoffe in die durch das Verdickungsmittel aufgeschlossene, hochviskose Lösung zu zugegeben und zu verteilen, was sehr Energieaufwendig und schwierig ist. Ein zentrales Problem ergibt sich daraus, dass bei Zugabe der Zusatzstoffe der pH-Wert bis auf 9 ansteigt und demzufolge die Zellulose sofort zu quellen beginnt, sodass sich die Zugabe des Celluloseethers zu Beginn des Verfahrens verbietet.

Die Aufgabe vorliegender Erfindung ist es, ein Herstellungsverfahren für Dispersionsfarben unter Verwendung von Celluloseethern und/oder Xanthane als Verdickungsmittel vorzuschlagen, die sich klumpenfrei einarbeiten lassen. Gegenstand der Erfindung sind Verfahren und Produckte gemäß den Ansprüchen 1-8. Gelöst wird diese Aufgabe erfindungsgemäss dadurch, dass die Verarbeitungszeit in Form des Unter- und Vermischens des Celluloseethers und/oder Xanthane mit den übrigen in wässriger Phase vorliegenden Zusatzstoffen kürzer ist als die Aufquellzeit des Celluloseethers und/oder der Xanthane.
Für das Gelingen des erfindungsgemäßen Verfahrens ist entscheidend, dass bei Zugabe des Verdickungsmittels die technologische Verarbeitungsgeschwindigkeit geringer ist als die Aufquellzeit (Reaktionszeit) des Celluloseethers, sodass ein Untermischen und Vermischen trotz des bereits einsetzenden Quellvorganges ohne weiteres möglich ist. Die Verarbeitungszeit ist also kürzer als die Quellzeit. Als Maß für das Aufquellen der Cellulose lässt sich der dementsprechende Viskositätszustand, der sich sehr gut messtechnisch erfassen lässt, verwenden. Grundsätzlich gilt, dass der Quellvorgang proportional zum Anstieg der Viskosität geht. Entscheidend zur Beschreibung des Quellvorganges ist, dass ich festlegen kann, dass dann, wenn ausgehend vom Ursprungsmaterial sich die Viskosität um einen Faktor erhöht hat, der Quellvorgang abgeschlossen ist. Es ist möglich, die Viskosität zahlenmäßig anzugeben, da hierfür allgemein gültige Maßstäbe existieren. Die Erhöhung könnte sich auch durch eine prozentuale Angabe beschreiben lassen, dass also der Vorgang dann abgeschlossen ist, wenn sich die Viskosität um Faktor X erhöht hat. Gemäß der Forderung der Erfindung muss die Aufquellzeit (Reaktionszeit) des Celluloseethers größer sein als die Bearbeitungszeit des Durchmischens und Untermischens während der Bearbeitungsphase.
Die Verarbeitungsgeschwindigkeit hat so schnell bzw. die Aufquellzeit des Celluloseethers so langsam zu erfolgen, dass sich keine Klumpen und Knoten ausbilden können. Die Überwachung der Freiheit von Klumpen und Knoten geschieht dadurch, dass man einen Aufzug auf einer Glasfläche herstellt und nach dem Ablaufen feststellt, ob Klumpen zurückbleiben oder ob eine völlig glatte Oberfläche vorliegt. Man trägt die Farbe zu diesem Zweck auf eine Glasplatte auf, lässt sie ablaufen, wobei sich dann unten eine höhere Dicke einstellt als weiter oben. Je dünner die Schicht ist, umso selektiver und kleiner sind die Knoten, die man feststellen kann, da sie bei zu großem Durchmesser über die Oberfläche nach außen überstehen und als Unebenheiten erkannt werden. Bei diesem Testverfahren ist sicher zu stellen, dass die Schicht so dünn gewählt wird, dass bei der späteren Anwendung des Kundens die Schicht (des Anstrichs) dem gegenüber höher ist, sodass das Aussehen einer glatten Oberfläche gewährleistet ist. Durch diese den Herstellungsprozess überwachenden Messwerte lässt sich feststellen, ob das Herstellungsverfahren im erfindungsgemäßen Sinne betrieben wird. Verfahrensparameter im absoluten Sinne lassen sich aufgrund der Vielzahl der auf den Herstellungsprozess einwirkenden Parameter im allgemeinen nicht angeben. So spielt beispielsweise die Fähigkeit zur Benetzung der Feststoffpartikel einen entscheidenden Einfluss, die nicht nur von der Wahl der entsprechenden Flüssigkeit abhängt sondern auch davon mit welcher Viskosität die Flüssigkeit eingesetzt wird, da dünne Flüssigkeiten besser zu benetzen in der Lage sind. Auch müssen die Materialien selbst nicht nur prinzipiell benetzbar sein, sondern je größer die relative Oberfläche des Materiales ist, umso besser lässt es sich benetzen.

Die Freiheit von Klumpen des fertigen Endproduktes "Dispersions-farbe" bedeutet, dass die im Endprodukt enthaltenen maximalen Korngrößen unter einem bestimmten Limit zu liegen kommen. Die maximale Korngröße hängt im wesentlichen mit den Anforderungen der späteren Anwendung und wird durch die Einstellung der Parameter des Herstellungsverfahrens bestimmt. Für Dispersionsfarben wird häufig und im allgemeinen gefordert und fordern wir hiermit auch eine Kornfeinheit von unter 50 µm, dann soll im Sinne der Erfindung von Klumpenfreiheit gesprochen werden.

Aufgrund experimenteller Erfahrungen ist bekannt, dass sich die zur Verfügung stehende Zeit für das Aufquellen und Verarbeiten im Bereich von Millisekunden ms bewegt.
Bei den Verfahren im Stande der Technik werden die Zusatzstoffe in die hochviskose Konsistenz eindispergiert. In unserem Fall werden die weiteren Feststoffe in die wässrige Phase eingebracht und können dort ohne weiteres dispergiert werden. Hierin liegt eine der wesentlichen Unterschiede des erfindungsgemäßen Verfahrens gegenüber dem Stand der Technik. Es braucht keiner näheren Begründung, dass das Zugeben zu einer wässrigen Phase das Dispergieren wesentlich vereinfacht, was einen entscheidenden Vorteil zum Ergebnis hat, dass der zu treibende Energieaufwand beim Dispergieren verglichen mit dem Stande der Technik wesentlich geringer ist. Aufgrund der Möglichkeit des besseren Eindispergierens ist ein weiterer wesentlicher Vorteil darin zu sehen, dass die Verwendung und Ausnutzung der zuzugebenden Komponenten wesentlich effizienter erfolgen kann. Aufgrund des unterschiedlichen reologischen Verhaltens ist der Unterschied in dem zu treibenden Energieaufwand erheblich.

Eine wesentliche Ausgestaltung der Erfindung besteht darin, dass die Herstellung der Dispersionsfarbe in einem zweistufigen Prozess erfolgt. So lässt sich ein Halbfabrikat herstellen, dass zu einem anderen Zeitpunkt, an einem anderen Ort zur endgültigen Herstellung der Dispersionsfarbe eingesetzt wird. So ist es möglich, dieses Halbfabrikat in den Verkehr zu setzen und der Kunde vor Ort erstellt selbst das Endprodukt. Zu diesem Zweck schlägt die Erfindung konkret vor, dass alle Feststoffe, Pigmente, Zusatzstoffe und dergleichen, also alle in den Dispersionsfarben enthaltenen Bestandteile jedoch mit Ausnahme der Bindemittel und Verdüngungsmittel in eine wässrige Phase eingebracht und vermischt sind. In der zweiten Stufe, also vor Ort, werden die fehlenden Komponenten nämlich Celluloseether und Bindemittel entsprechend dem vorliegenden erfindungsgemäßen Verfahren zugegeben.

Ein wesentlicher Vorteil ist, dass ein Halbfabrikat herstellbar ist, d. h. alle Feststoffe und Pigmente (außer Binde- und Verdickungsmittel) in einer wässrigen Phase beinhaltet, das universell einsetzbar ist. Dies ist bei den Verfahren des Standes der Technik nicht machbar, weil nicht genügend freies Wasser zur Verfügung steht, da es an den Celluloseether gebunden wäre. Dieses Wasser fehlt dann im letzen Herstellungsschritt, in dem aus dem Halbfabrikat das gesamte Produkt zusammengemischt wird. In der vorgeschlagenen Lösung wird zu Beginn des Herstellungsprozesses das Wasser eingespart, da es nicht aufgenommen werden kann, nachdem die Cellulose nicht vorhanden ist. Ein solches Halbfabrikat lässt sich im Stande der Technik in Folge des fehlenden Wassers nicht herstellen. Die weitere Vorgehensweise ist wie folgt: In dieses Halbfabrikat wird dann der Celluloseether eingebracht und das Bindemittel eingerührt und somit das Endprodukt fertig gestellt. Der Kunde erhält durch das Halbfabrikat die wesentlichen Bestandteile und es wird ihm ermöglicht die zur Fertigstellung des Endproduktes erforderlichen Komponenten (Cellulose, Bindemittel) anderweitig zu beziehen und dann im erfindungsgemäßen Sinne zu verarbeiten. Dieses Halbfabrikat bzw. die dadurch mögliche Vorgehensweise ist im Stande der Technik nicht möglich.

Ein entscheidender weiterer Vorteil besteht darin, dass beim erfindungsgemäßen Verfahren eine wesentlich bessere Grunddispergierung möglich ist und damit die Herstellung von glatteren Oberflächen. Zudem erhöht sich der Rohstoffausnutzungsgrad erheblich, weil das Dispergieren im viskoser Zustand schwierig ist. Der Vorteil des Halbproduktes ergibt sich daraus, dass das nötige Wasser vorhanden ist was nur dadurch möglich wird, dass der Celluloseether erst am Ende beigegeben wird.

Das Halbfertigfabrikat ist frei von Verdickern und von Bindemitteln und deshalb in den Verkehr bringbar, da dies anderenfalls aufgrund der hohen Viskosität grundsätzlich nicht möglich oder wenig vertretbar wäre. Hierfür gibt es mehrere Gründe:

Als Halbfabrikat liegt die bereits komplett vermischte Farbe vor, sodass man die Feststoffe aufgrund der hohen Viskosität nicht mehr in dem Maße dispergieren muss wie andernfalls erforderlich. Das ist nur dann möglich, wenn der Wasserhaushalt entsprechend angepasst ist, was voraussetzt, dass der Verdicker nicht enthalten ist, weil er jede Menge Wasser bindet, was letztlich auch der Sinn des Verdickers ist.

In einer Alternative können die im Halbfabrikat enthaltenen Feststoffe als Feststoffmischung geliefert werden, die der Kunde mit Wasser vermischen muss, sodass das Wasser nicht zu transportiert ist.

Auch zählt ein finanzieller Aspekt. Die durch den Celluloseether aufgeschlossene Substanz verleiht die Eigenschaft einer hochviskosen kleisterartige Konsistenz. Die Lieferung der Dispersionsfarbe als Komplettlieferung, jedoch ohne Bindemittel bedeutet, dass man die hochviskose Konsistenz transportieren müsste, sodass man wirtschaftlich gesehen und aufgrund des gleichen Aufwands auch gleich die fertige Dispersionsfarbe anliefern kann.

Würde man eine Feststoffmischung, die alle Komponenten enthält anliefern und verlangen, dass sie in die hochviskose Konsistenz eingebracht wird, so ist dies aufgrund der Konsistenz nur mit extrem hohem Aufwand möglich.

Ein weiterer Aspekt besteht darin, dass dann, wenn man die Feststoffkomponenten auflöst und singuläre Aufschlämmungen (Slurries) herstellt und diese nachträglich, z. B. nach dem eigenen Gutdünken des Anwenders gemischt werden, nicht zum Ziel führen, da aufgrund der Rezeptstruktur jede Slurry sehr viel Wasser enthält, die im Ergebnis eine sehr dünnflüssige Konsistenz ergibt, die sich nicht als Farbe eignet oder man müsste erhebliche Mengen an Verdickungsmittel beigeben, was wirtschaftlich nicht vertretbar wäre.

Ziel ist eine knoten- und klumpenfreie Mischung zu erhalten. Es geht nicht nur um das Mischen und Dispergieren, sondern auch um die chemische Reaktion, d. h. ich muss ein Aufquellen erreichen, aber andererseits dürfen keine Klumpen oder Knoten hinterlassen werden. Das geht nur über den Faktor Zeit, der im ms Bereich liegt. Unter chemischer Reaktion ist hier das Aufquellen, die präzise als physikalisch-chemische Reaktion zu bezeichnen wäre, zu verstehen.

Für das Durchmischen fester und flüssiger Komponenten ist die Verwendung eines Dissolvers als naheliegend zu betrachten. Die einzutragende Energiemenge lässt sich bei einem Dissolver über Einstellung der Umdrehungsgeschwindigkeit wunschgemäß variieren. Die Dispersion bestimmt sich nach der zugeführten Dispersionsenergiemenge, die anhand der Zeit aber auch durch die Dispergiergeschwindigkeit bemessen ist. Wenn man ein Pulver einbringt, dann sind die einzelnen Pulverkörner zusammengepresste Teile, die man auseinander brechen und zerkleinern muss, und dafür ist ein Energieeintrag erforderlich. Es geht aber nicht nur um die zugeführte Energie, da ein Großteil - bei einem Dissolver bis zu 90 % - in Wärmeenergie umgewandelt werden. Letztlich geht es um die Nutzenergie, d. h. jene Energie, die für die Dispersion aufgewandt wird (sie entspricht dem Wirkungsgrad). Auch muss der Prozess innerhalb einer gewissen Zeitspanne ablaufen. Erst die Kombination führt ans Ziel.

### Zur Wirkungsweise eines Dissolvers:

Beim Betätigen bildet die Flüssigkeit einen Trombus, in den der Feststoff eingeschüttet wird. Ursache ist, dass der Dissolver zentrisch eine Rotationsbewegung ausführt. Die zugeführten Feststoffpartikel werden an den Rand und an die Wand geschleudert und dort mit Hilfe der Dissolverscheibe geschert. Nachdem wir in einem hochviskosen Medium arbeiten, ist viel Energie aufzuwenden, die zum Großteil in Wärme umgewandelt wird und zu einem Anstieg der Temperatur führt, was wiederum die Viskosität senkt, sodass zwei gegenläufige Parameter stattfinden. Die Wirkzeit des Dissolvers in Relation zum Temperaturgradienten beträgt einige Minuten. Es geht darum möglichst viel Energie zuzuführen und die Temperatur niedrig zu halten, was sich nur über die Zeit einstellten und regeln lässt.

Nach Römpp Chemie Lexikon werden mit dem Begriff "Bindemittel" als Sammelbegriff alle Produkte bezeichnet, die gleich- oder verschiedenartige Stoffe miteinander verbinden, wobei das Abbinden selbst auf unterschiedliche Weise, z. B. durch physikalisches Trocknen, durch Erstarren oder Viskositätsanstieg, durch chemische Reaktionen oder durch Hydratisierung erfolgen kann. Aufgrund der beschriebenen Reaktionsmechanismen lässt sich eine klare Trennung der Bindemittel von den Verdickungsmitteln vornehmen. Insbesondere soll der als Verdickungsmittel eingesetzte Celluloseether im Sinne dieser Erfindung nicht als Bindemittel angesehen werden.

Aufgrund der Tatsache, dass sich die vorliegende Erfindung mit der Herstellung von Dispersionsfarben befasst, ist es von entscheidendem Vorteil, dass als Bindemittel ein Filmbilder verwendet wird, der nach der Herstellung des Anstriches zur Ausbildung und dem Zustandekommen eines Anstrichfilms Anlass gibt. Bevorzugt ist hier der Einsatz selbstständiger Filmbildner, die allein, d. h. ohne Zusatz von weiteren Substanzen mit oder ohne Sauerstoffeinfluss einen Anstrichfilm auszubilden vermögen. Bei den nichtselbstständigen Filmbildnern dagegen ist eine Ausbildung des Anstrichfilms nur in Gegenwart weiterer Komponenten, d. h. nur bei Anwendung geeigneter Gemische möglich.

Die Erfahrungen zeigen, dass auch bei Optimierung aller Verfahrensparameter die Verwendung eines Dissolvers einen Zeitaufwand im Sekundenbereich benötigt. Die erfahrungsgemäß notwendige Zeit von wenigen Millisekunden lassen sich auf diesen Wege nicht ohne weiteres einstellen. Es ist deshalb angezeigt, andere Vorrichtungen einzusetzen, z. B. solche, die nach dem Rotor-Stator-Prinzip arbeiten, wo das zu dispergierende Material über eine Pumpe angesaugt und in wenigen Millisekunden dispergiert und benetzt wird. Unter Rotor-Stator-Prinzip wird die Funktionsweise all jener Dispergiereinheiten bezeichnet, die nach dem Zentrifugalprinzip arbeiten. Durch die Bewegung des Rotors bildet sich ein Vakuum aus, über das die Feststoffe und auch die Flüssigkeiten beispielsweise in axialer Richtung vom Rotor eingesaugt werden. Bei hinreichend hohem Vakuum wird das Pulver verteilt ohne dass eine zusätzliche Förderluft erforderlich wäre. Als weiterer Vorteil ist anzusehen, dass die an dem Pulver anhaftenden Luftmoleküle, die sich in einer Gewichtsdifferenz zwischen dem Schüttgewicht und dem spezifischen Gewicht erfassen lassen, während des Benetzungsvorgangs abgetrennt werden. Das Ergebnis ist ein praktisch luftfreies Produkt. Die Abtrennung der Luft und die vollständige Zwangsbenetzung der Feststoffpartikel erfolgt im Vakuumbereich der Dispergierzone.
Allerdings ist die Durchführung des erfindungsgemäßen Herstellungsverfahrens nicht auf bestimmte Wirkprinzipien eingeschränkt sondern es können alle Vorrichtungen eingesetzt werden, welche zur Realisierung der erfindungsgemäß Verfahrensparameter in der Lage sind.

In vorteilhaften Ausführungsformen werden aus der Gruppe der hydrophobierten Celluloseether in besonderer Weise Methyl-Cellulose (MC), Methylhydroxyethylcellulose (MHEC), Methylhydroxypropylcellulose (MHPC), Hydroethylcellulose (HEC) und Ethylhydroxyethylcellulose (EHEC) genannt.

Besonders bevorzugt ist, bei der Durchführung des erfindungsgemäßen Verfahrens zunächst das Verdickungsmittel und anschließend, d. h. zeitlich versetzt das Bindemittel zuzugeben. Die hierbei erzielten Vorteile bestehen zum einen darin, dass das Verdickungsmittel, für den Fall, dass noch kleine Klumpen vorhanden wären, in der anschließenden Vermischung, z. B. in der Rotor-Stator-Anlage wesentlich besser feindispergiert werden kann, als dies im Fall des Vorhandenseins von Bindemittel wären, welches der feinen Dispersion entgegenwirkt. Ein weiterer wichtiger Gesichtspunkt besteht darin, dass die Bindemittel häufig nicht scherstabil sind, sodass während des Verarbeitens der Verdickungsmittel - so die Bindemittel schon vorhanden wären - Nachteile zu erwarten stehen. Wird hingegen das Bindemittel anschließen beigegeben, lässt es sich schonend einrühren bzw. unterbringen. Dies wäre der letzte Schritt der Herstellung der Dispersionsfarbe.

Zur weiteren Verdeutlichung wird ein konkretes Ausführungsbeispiel des erfindungsgemäßen Verfahrens im Folgenden beschrieben:

In einem Ansatzbehälter wird als Flüssigvorgabe Wasser eingegeben. Mehrere Komponenten von Zusatzstoffen werden jeweils in einem Ansatzbehälter vorgelegt. Die Temperatur beträgt 9° C. Im Anschluss daran werden alle Pulver in einem Pulvertrichter untergebracht und dort über die Dispergiereinheit Konti-TDS, die nach dem Rotor-Stator-Prinzip arbeitet, miteinander vermischt. Schließlich werden Wasser und weitere Komponenten zugegeben. Es erfolgt ein Dispergieren mit der Dispergiereinheit Konti-TDS und einem Leitstrahlmischer.

Für die Erfindung von entscheidender Bedeutung ist, dass anschließend die Zellulose ebenfalls über die Dispergiereinheit eingezogen und homogenisiert wird. Die Leistung liegt bei 85 - 90 kW bei einer Maschinendrehzahl von 3.600 Umdrehungen pro Minute. Anschließend wird zur Spülung des Pulverweges der Zellulose Natronlauge eingezogen. Anschließend erfolgt ein Umlaufdispergieren der Dispergiereinheit Konti-TDS mit der Leistung von 85 - 90 kW und einer Drehzahl von 3.600 Umdrehungen pro Minute.

Schließlich wird als letzter Herstellungsschritt Bindemittel zugegeben und untergemischt. Der Einzug von Pulver und Flüssigkeiten in die Dispergiereinheit erfolgt über den Fluidisierer FSA-5.

Es verbleibt das Abfüllen der Farbe in entsprechende Behältnisse.

Aus der nachfolgenden Übersicht lassen sich die Produktionsparameter eines speziellen Herstellungsverfahren für Dispersionsfarbe gemäß der Erfindung nochmals entnehmen und dadurch weiter verdeutlichen.

| **Dauer** | **Bemerkung** | **Leist.kW** | **Drehz. U/min** | **Temp. °C** | **Probe** |
|---|---|---|---|---|---|
| | Flussigvorlage: Zugabe von Wasser im Ansatzbehälter, Einschalten von Leistrahlmischer | | 250 | 9,0 | |
| | Zugabe von Additiv 1 in Ansatzbehälter Homogenisieren mit Leitstrahlmischer | 0,3 | 350 | | |
| | Zugabe von Additiv 2 in Ansatzbehälter Homogenisieren mit Leitstrahlmischer | 0,3 | 350 | | |
| | Zugabe von Additiv 3 in Ansatzbehälter Homogenisieren mit Leitstrahlmischer | 0,3 | 350 | | |
| | Zugabe von Additiv 4 in Ansatzbehälter Homogenisieren mit Leitstrahlmischer | 0,3 | 350 | | |
| | Probemessung pH-Wert | | | | |
| | Vorlage alle Pulver im großen Pulvertrichter; Einziehen der Fest- und Füllstoffe über ContiTDS und FSA-5 Fluidisierer in den Ansatzbehälter, Homogenisieren mit Leitstrahlmischer | 70 | 3600 | 16 | |
| | | 1,2 | 650 | | |
| | Zugabe Wasser Homogenisieren mit Leitstrahlmischer | | 650 | | |
| | Zugabe von Additiv 5 im Ansatzbehälter Homogenisieren mit Leitstrahlmischer | | 650 | | |
| | Zugabe von Additiv 6 im Ansatzbehälter Homogenisieren mit Leitstrahlmischer | | 650 | | |
| | Umlaufdispergieren mit Dispergiereinheit Conti-TDS und Leitstrahlmischer bis 20°C | 80-82 | 3600 | 20 | |
| | | 1,5 | 650 | | |
| | Probemessung pH- Wert | | | | |
| | ***Einziehen der Zellulose über 2. Pulverweg mit einent zusätzlichen Pulvertrichter und Conti-TDS, Homogenisieren mit Leitstrahlmischer*** | ***85-90*** | ***3600*** | | |
| | | ***6,6*** | ***650-1250*** | | |
| | ***Einziehen der Natronlauge über 2. Pulverweg mit einem zusätzlichen Pulvertrichter (Spülen des Pulverwegs von Zellulose) und Conti-TDS, Homogenisieren mit Leitstrahlmischer*** | | | | |
| | ***Umlunfdispergieren mit Dispergiereinheit Conti-TDS und Leitstruhlmischer bis 45°C*** | ***85-90*** | ***3600*** | ***45*** | |
| | | ***5,0-7,5*** | ***1050-1250*** | | |
| | ***Zugabe von Bindemittel in Ansatzbehälter, Homogenisieren über Leitstrahlmischer*** | | ***1250*** | | |
| | Abfüllen in Container/ Ende | | | | |

## Patentansprüche

1. Verfahren zur Herstellung von Dispersionsfarbe unter Verwendung von Zusatzstoffen wie Füllstoffen, Pigmenten, Additiven, Dispergiermittel, Entschäumer, Filmbindehilfsmittel, Konservierungsmittel sowie Celluloseether und/oder Xanthane als Verdickungsmittel sowie Bin.-demittel, **dadurch gekennzeichnet, dass** die Verarbeitungszeit in Form des Unter- und Vermischens des Celluloseethers und/oder Xanthane mit den übrigen in wässriger Phase vorliegenden Zusatzstoffen kürzer ist als die durch Messung der Viskosität ermittelte Aufquellzeit des Celluloseethers und/oder der Xanthane.

2. Verfahren nach Anspruch 1, **dadurch gekennzeichnet, dass** das Bindemittel ein Filmbildner, insbesondere ein selbständiger Filmbildner ist.

3. Verfahren nach Anspruch 1 oder 2, **dadurch gekennzeichnet, dass** eine nach dem Rotor-Stator-Prinzip arbeitende Vorrichtung zum Untermischen des Celluloseethers und/oder Xanthane eingesetzt wird.

4. Verfahren nach Anspruch 1 oder 2, **dadurch gekennzeichnet, dass** als Celluloseether Methyl-Cellulose (MC), Methylhydroxyethylcellulose (MHEC), Methylhydroxypropylcellulose (MHPC), Hydroethylcellulose (HEC) und/oder Ethylhydroxyethylcellulose (EHEC) Anwendung finden.

5. Halbfabrikat zur Durchführung des Verfahrens zur Herstellung von Dispersionsfarbe enthaltend Füllstoffe, Pigmente, Additive, Dispergiermittel, Entschäumer, Filmbindehilfsmittel, Konservierungsmittel sowie Celluloseether und/oder Xanthane als Verdickungsmittel sowie Bindemittel nach Anspruch 1, **dadurch gekennzeichnet, dass** alle die Komponenten der Dispersionsfarbe mit Ausnahme des Verdickungs- und Bindemittels in wässriger Phase als Suspension vorliegen.

6. Halbfabrikat zur Durchführung des Verfahrens zur Herstellung von Dispersionsfarbe unter Verwendung von Zusatzstoffen wie Füllstoffen, Pigmenten, Additiven, Dispergiermittel, Entschäumer, Filmbindehilfsmittel, Konservierungsmittel sowie Celluloseether und/oder Xanthane als Verdickungsmittel sowie Bindemittel nach Anspruch 1, **dadurch gekennzeichnet, dass** alle die Komponenten der Dispersionsfarbe mit Ausnahme des Verdickungs- und Bindemittels sowie Wasser als Feststoffkomponenten vorliegen.

7. Verfahren nach Anspruch 1 unter Verwendung des Halbfabrikats nach Anspruch 5 oder 6, **dadurch gekennzeichnet, dass** dem Halbfabrikat, gegebenenfalls nach Zugabe von Wasser, Verdickungs- und Bindemittel beigemischt werden.

8. Verfahren nach einem der Ansprüche 1,4 oder 7, **dadurch gekennzeichnet, dass** das Bindemittel zeitlich nach dem Verdickungsmittel zugesetzt wird.

## Claims

1. Method for producing emulsion paint using admixtures such as fillers, pigments, additives, dispersing agents, defoaming agents, film binding aids, preservatives, as well as cellulose ethers and/or xanthans as thickeners and binders, **characterised in that** the processing time, in the form of mixing and blending the cellulose ether and/or xanthan with the other admixtures present in the aqueous phase, is shorter than the swelling time of the cellulose ether and/or xanthans.

2. Method according to claim 1, **characterised in that** the binder is a film-forming agent. In particular an independent film-forming agent

3. Method according to claim 1 or 2, characterised that a device that operates according to the rotor-stator principle is used for mixing in the cellulose ether and/or xanthans.

4. Method according to claim 1 or 2, **characterised in that**, as cellulose ether, methylcellulose (MC), methyl hydroxyethyl cellulose (MHEC), methyl hydroxylpropyl cellulose (MHPC), hydroxyethyl cellulose (HEC) and/or ethyl hydroxyethyl cellulose (EHEC) are used.

5. Semifinished product for performing the method for the production of emulsion paint containing fillers, pigments, additives, dispersion agents, defoaming agents, film-forming agents, conservation agents as well as cellulose ethers, and/or xanthans as thickening agent, as well as binder according to claim 1, **characterised in that** all components of the emulsion paint, with the exception of the thickening agent and binder, are present in the aqueous phase as suspensions.

6. Semifinished product for performing the method for the production of emulsion paint with the use of fillers, pigments, additives, dispersion agents, defoaming agents, film-forming agents, conservation agents as well as cellulose ethers, and/or xanthans as thickening agent, as well as binder, according to claim 1, **characterised in that** all components of the emulsion paint, with the exception of the thickening agent and binder as well as water, are present as solid components.

7. Method according to claim 1 with the use of the semifinished product according to claim 5 or 6, **characterised in that** thickening agents and binders are admixed to the semifinished product, if appropriate after the addition of water.

8. Method according to one of claims 1, 4 or 7, **characterised in that** the binder is added chronologically after the thickening agent.

## Revendications

1. Procédé destiné à fabriquer une peinture de dispersion en utilisant des adjuvants tels que des agents de charge, des pigments, des additifs, des agents dispersants, des antimousses, des liants auxiliaires de films, des agents de conservation ainsi que de l'éther de cellulose et/ou du xanthane en tant qu'épaississant et que liant, **caractérisé par le fait que** le temps de traitement sous la forme d'adjonction et de mélange de l'éther de cellulose et/ou du xanthane avec les autres adjuvants présents en phase aqueuse est plus court que le temps de gonflement de l'éther de cellulose et/ou du xanthane déterminé par la mesure de la viscosité.

2. Procédé selon la revendication 1, **caractérisé par le fait que** le liant est un filmogène, notamment un filmogène autonome.

3. Procédé selon la revendication 1 ou 2, **caractérisé par le fait qu'**il recourt à un dispositif fonctionnant selon le principe rotor-stator pour adjoindre l'éther de cellulose et/ou le xanthane.

4. Procédé selon la revendication 1 ou 2, **caractérisé par le fait qu'**on utilise, en tant qu'éther de cellulose, du méthylcellulose (MC), du méthylhydroxyéthylcellulose (MHEC), du méthylhydroxypropylcellulose (MHPC), de l'hydroxyéthylcellulose (HEC) et/ou de l'éthylhydroxyéthylcellulose (EHEC).

5. Produit semi-fini destiné à exécuter le procédé de fabrication d'une peinture de dispersion contenant des agents de charge, des pigments, des additifs, des agents dispersants, des antimousses, des liants auxiliaires de films, des agents de conservation ainsi que de l'éther de cellulose et/ou du xanthane en tant qu'épaississant et que liant selon la revendication 1, **caractérisé par le fait que** tous les composants de la peinture de dispersion existent en tant que suspension en phase aqueuse à l'exception de l'épaississant et du liant.

6. Produit semi-fini destiné à exécuter le procédé de fabrication d'une peinture de dispersion contenant des adjuvants tels que des agents de charge, des pigments, des additifs, des agents dispersants, des antimousses, des liants auxiliaires de films, des agents de conservation ainsi que de l'éther de cellulose et/ou du xanthane en tant qu'épaississant et que liant selon la revendication 1, **caractérisé par le fait que** tous les composants de la peinture de dispersion existent en tant que composants solides à l'exception de l'épaississant et du liant.

7. Procédé selon la revendication 1 utilisant le produit semi-fini selon la revendication 5 ou 6, **caractérisé par le fait qu'**un épaississant et un liant sont adjoints au produit semi-fini, le cas échéant après adjonction d'eau.

8. Procédé selon une des revendications 1, 4 ou 7, **caractérisé par le fait que** le liant est adjoint, du point de vue temporel, après le liant.
